# FASCICULE DE BREVET EUROPEEN

(11) **EP 3 845 974 B1**
(45) Date de publication et mention de la délivrance du brevet: **21.02.2024**
(21) Numéro de dépôt: 19220169.7
(22) Date de dépôt: 31.12.2019
(51) Int. Cl.: G04B 19/32, G04B 19/04, G01D 11/28, G01D 13/26, G04B 19/30

(54) **INDICATEUR MOBILE POUR UN DISPOSITIF D'AFFICHAGE ANALOGIQUE**
BEWEGLICHER ZEIGER FÜR EINE ANALOGE ANZEIGEVORRICHTUNG
MOBILE INDICATOR FOR AN ANALOGUE DISPLAY DEVICE

(43) Date de publication de la demande: 07.07.2021
(73) Titulaire: The Swatch Group Research and Development Ltd, 2074 Marin (CH)
(72) Inventeur: TORTORA, Pierpasquale, 2000 Neuchâtel (CH)
(74) Mandataire: ICB SA

(56) Documents cités:
- EP-A1- 1 319 998
- DE-A1- 3 300 270
- DE-A1-102012 004 100
- FR-A1- 2 670 287
- JP-A- H04 174 322
- US-A1- 2013 083 508

## Description

### Domaine Technique

L'invention concerne un indicateur mobile (p. ex une aiguille) pour un dispositif d'affichage analogique, notamment dans une pièce d'horlogerie. L'invention concerne aussi un jeu d'indicateurs comprenant plusieurs indicateurs mobiles. D'autres aspects de l'invention concernent un dispositif d'affichage pour une pièce d'horlogerie comprenant lesdits indicateurs ainsi qu'une montre comprenant ledit dispositif d'affichage.

### Arrière-plan technologique

EP 2950166 concerne un jeu d'aiguilles d'affichage lumineuses pour un objet portable, l'objet portable comprenant un bâti dans lequel est logée une source d'alimentation en énergie électrique comprenant une première et une seconde borne. Le jeu d'aiguilles d'affichage lumineuses comprend au moins une première et une seconde aiguille d'affichage lumineuse réalisées en un matériau non conducteur de l'électricité et dans lesquelles est ménagé un trou pour le passage d'un axe d'entraînement. L'axe d'entraînement de la seconde aiguille d'affichage lumineuse est disposé concentriquement à l'intérieur de l'axe d'entraînement de la première aiguille d'affichage lumineuse. Chacune des première et seconde aiguilles d'affichage lumineuses porte une première, respectivement une seconde source de lumière qui émet de la lumière. Les premières et secondes sources de lumière comprennent chacune un premier et un second pôle. Selon que le montage est en parallèle ou en série, le premier pôle ou le second pôle de la seconde source de lumière est relié au premier pôle de la première source de lumière par contact entre la première et la seconde aiguille lumineuse.

EP 2950168 concerne un jeu d'aiguilles d'affichage lumineuses pour un objet portable dans lequel est logée une source d'alimentation en énergie électrique. Le jeu d'aiguilles d'affichage lumineuses comprend au moins une première et une seconde aiguille d'affichage lumineuse superposées munies chacune d'un trou pour le passage d'un axe d'entraînement. L'axe d'entraînement de la seconde aiguille d'affichage lumineuse étant disposé concentriquement à l'intérieur de l'axe d'entraînement de la première aiguille avec interposition d'une couche isolante entre les deux axes d'entraînement. Chacune des première et seconde aiguilles d'affichage lumineuses porte une première, respectivement une seconde source de lumière. Les première et seconde sources de lumière comprennent chacune un premier et un second pôle, le premier pôle de la première source de lumière étant relié électriquement à une première borne de la source d'alimentation via l'axe d'entraînement de la première aiguille d'affichage lumineuse, le second pôle de la première source de lumière étant relié au premier pôle de la seconde source de lumière via une pièce de contact qui assure la continuité électrique entre la première et la seconde aiguille d'affichage lumineuse. Le second pôle de la seconde source de lumière est relié à la seconde borne de la source d'alimentation via l'axe d'entraînement de la seconde aiguille d'affichage lumineuse.

Dans ces deux exemples, l'alimentation électrique des sources de lumière est assurée par des contacts frotteurs entre les axes d'entrainement des aiguilles et entre la pile et les engrenages du mouvement. Le principal désavantage de cette solution, en particulier pour des montres, est la surcharge mécanique dû au frottement des contacts électriques, qui peut engendrer des pertes d'énergies permanentes de l'ordre de 12%. Ces frottements peuvent, en outre, provoquer une perte de précision de la montre, et également induire une usure non contrôlée des contacts.

DE3300270A1 décrit une aiguille en matériau non transparent fluorescent 4 comprenant un corps principal allongé et une partie à angle droit formant un axe. Un support opaque 11 est réalisée sur la partie inférieure du corps principal qui forme, avec la partie formant l'axe, un guide d'onde pour une lumière émise par une source de lumière 6 arrangée sous l'extrémité libre de l'axe. Une surface réfléchissante 7 est agencée dans le corps de l'aiguille pour rediriger la lumière traversant l'axe en direction du corps principal dans les deux directions. La tête de l'aiguille est entourée par les couches 10, 11 et 12 afin de réémettre la lumière fluorescente entre autre dans la direction du guide d'onde.

La présente invention concerne un indicateur mobile pour un dispositif d'affichage analogique, selon la revendication indépendante 1. L'indicateur comprend une pièce à plusieurs couches incluant une couche métallique opaque et une couche guide de lumière transparente. La pièce forme un corps et une tête de l'indicateur. La tête est centrée par rapport à un axe de rotation de l'indicateur et agencée pour recevoir un flux lumineux sur sa face inférieure. Un matériau fluorescent est agencé sur la couche guide de lumière transparente au niveau de tête de l'indicateur pour absorber au moins une partie dudit flux lumineux et pour réémettre un second flux lumineux de fluorescence dans la couche guide de lumière transparente.

En utilisation, l'indicateur mobile est arrangé de telle façon que la couche métallique opaque de la pièce à plusieurs couches soit du côté observateur. La couche opaque par exemple métallique qui peut être réalisée sous la forme d'une feuille métallique (typiquement avec une épaisseur de 0,12 mm) et qui peut être directement visible par l'observateur ou être cachée par une couche décorative arrangée sur cette dernière (p. ex. arrangée par impression, par diamantage, par mise en couleur par PVD, par galvanoplastie ou par laque colorée). Inversement, la couche guide de lumière transparente se situera, en utilisation, en dessous de la couche métallique opaque et ne sera donc pas visible par l'observateur. Par « face inférieure », on entend la face opposée et donc cachée à l'observateur lorsque l'indicateur mobile est en utilisation.

Par « matériau fluorescent », on entend un matériau comprenant des molécules fluorescentes, c.-à-d. possédant la propriété d'absorber un flux lumineux incident (lumière d'excitation) et de le restituer sous forme de flux lumineux de fluorescence (lumière d'émission). Une fois l'énergie du photon absorbée, la molécule se trouve alors généralement dans un état électronique et vibrationnel excité. Une relaxation des états vibrationnels excités se déroule avant qu'une lumière fluorescente soit émise (ayant une plus grande longueur d'onde que la lumière d'excitation). Le flux lumineux de fluorescence est généralement émis de façon isotrope.

Il sera apprécié que la solution proposée par le premier aspect de l'invention permet de s'affranchir de contacts physiques, en particulier des frottements, entre l'indicateur mobile et la structure sous-jacente stationnaire comprenant un dispositif pour émettre un flux lumineux. En effet, le matériau fluorescent est excité à distance, sans contact physique, par le flux lumineux incident.

Par ailleurs, contrairement aux techniques connues visant à coupler la lumière dans un guide depuis une direction verticale selon lesquelles on usine des micro-prismes ou des réseaux diffractifs sur la surface du guide, techniques qui sont compliquées et couteuse à mettre en oeuvre, la couche de matière fluorescente peut être facilement déposée par une méthode quelconque (spray, dispenser, imprimante inkjet) et ne nécessite pas d'orientation pour dévier la lumière dans l'axe de l'aiguille, ce qui est nécessaire avec les prismes et les réseaux diffractifs.

Un autre avantage de la solution proposée par l'invention est qu'à partir de la même source primaire, et en choisissant un type de pigment déterminé, on peut générer une fluorescence d'une couleur choisie, ce qui ne peut pas être réalisé avec des structures de couplage utilisant des prismes et les réseaux diffractifs qui se limitent à dévier la lumière provenant d'une source primaire et donc dont la couleur est celle de la source.

La couche guide de lumière transparente peut produire une réflexion totale interne des rayons lumineux du second flux lumineux et ainsi une propagation sensiblement perpendiculaires audit axe de rotation.

La pièce à plusieurs couches peut comprendre une couche d'isolation optique entre la couche métallique opaque et la couche guide de lumière transparente. Par « couche d'isolation optique », on entend une couche favorisant des réflexions totales internes d'un flux de lumière se propageant dans la couche guide de lumière transparente par rapport à la situation où la couche guide de lumière transparente serait en contact direct avec la couche métallique opaque. La différence Δn entre l'indice de réfraction de la couche d'isolation optique et l'indice de réfraction de la couche guide de lumière transparente peut être compris dans l'intervalle allant de 0,5 à 0,9, préférablement de 0,55 à 0,8, plus préférablement de 0,6 à 0,75.

La couche d'isolation optique peut avoir une épaisseur comprise dans l'intervalle allant de 2 µm à 15 µm, préférablement de 3 µm à 12 µm, encore plus préférablement de 5 µm à 10 µm.

Il sera apprécié que la structure de l'indicateur ci-dessus permet une fabrication aisée de celui-ci par des méthodes connues dans l'art. Par exemple, les plusieurs couches de la pièce peuvent d'abord être déposées puis étampées ou découpées afin de former l'indicateur. D'autre part, aucun montage, collage, ou micro-manipulation n'est requis pour agencer les couches de la pièce.

La pièce peut être plate et ses faces supérieure et inférieure peuvent être planes. Selon une variante la face supérieure peut être non plane.

La tête peut comporter un trou central dans lequel peut éventuellement être arrangé une douille en matière opaque. La douille peut être formée séparément de la pièce ou être intégrale à la pièce. Selon un mode de réalisation, la douille peut être intégrale à la couche métallique opaque.

L'indicateur peut être une aiguille, p. ex. aiguille pour une montre.

Un aspect de l'invention concerne un jeu d'indicateurs comprenant, au moins, un premier indicateur et un second indicateur (éventuellement étant des aiguilles), chacun tel que décrit ci-dessus, avec une tête comportant un trou central dans lequel est arrangée une douille en matière opaque. Le premier indicateur comprend un ou plusieurs trous secondaires arrangés autour du trou central de la tête, de telle façon à permettre audit flux lumineux de traverser le premier indicateur au travers des trous secondaires pour qu'au moins une partie dudit flux soit absorbé par le matériau fluorescent du second indicateur lorsque le premier indicateur et le second indicateur sont arrangés avec leurs axes de rotation confondus.

Un autre aspect de l'invention concerne un dispositif d'affichage pour une pièce d'horlogerie. Le dispositif comprend :
∘ un cadran ;
∘ des indicateurs tels que décrits ci-dessus, disposés au-dessus du cadran, les têtes respectives des indicateurs étant superposées et fixées à des arbres respectifs pour tourner autour d'un axe de rotation commun ; et
∘ une source stationnaire d'éclairage agencée pour éclairer par-dessous l'ensemble des têtes des indicateurs au moyen d'un flux lumineux sensiblement parallèle à l'axe de rotation commun et ayant une longueur d'onde plus petite que la longueur d'onde réémise par le matériau fluorescent.

La source stationnaire d'éclairage peut comporter des diodes électroluminescentes et/ou des diodes électroluminescentes organiques qui sont réparties autour desdits arbres et montées sur un élément à circuits imprimés disposé au-dessous du cadran.

Encore un aspect de l'invention concerne une montre comprenant un dispositif d'affichage tel que décrit ci-dessus, les indicateurs étant des aiguilles.

### Brève description des dessins

D'autres particularités et caractéristiques de l'invention ressortiront de la description détaillée de certains modes de réalisation avantageux présentés ci-dessous, à titre d'illustration, avec référence aux dessins annexés qui montrent :
**Fig. 1****:** une vue schématique en coupe verticale d'un dispositif d'affichage analogique de l'heure au moyen d'aiguilles lumineuses selon un mode de réalisation de l'invention, dans une montre ;
**Fig.2****:** une vue schématique en coupe verticale d'une aiguille selon un mode de réalisation de l'invention ; et
**Fig. 3****:** une vue en perspective de l'aiguille selon un mode de réalisation de l'invention.

### Description détaillée de plusieurs modes de réalisation de l'invention

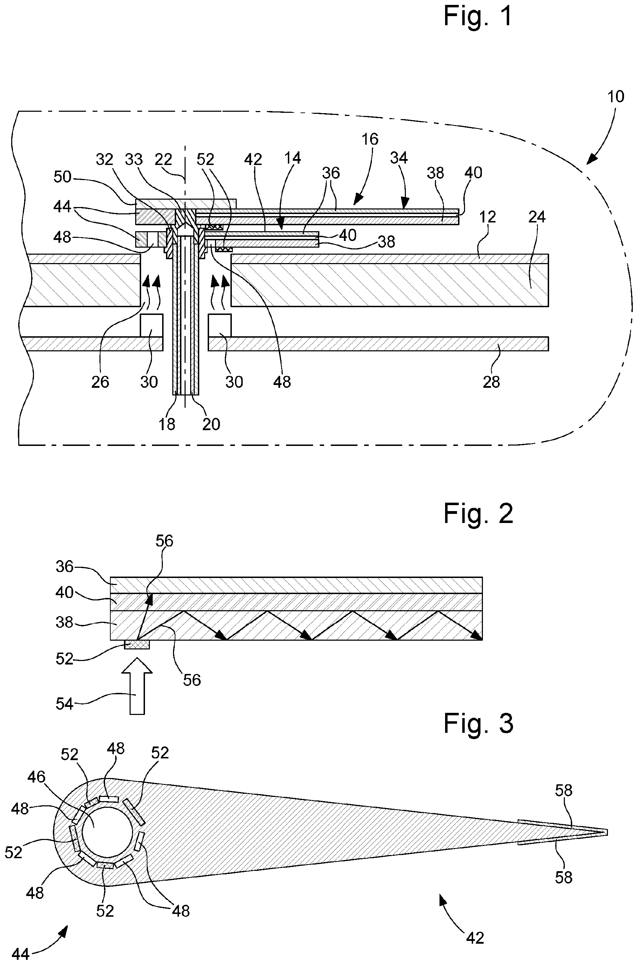

La Fig. 1 représente schématiquement le contour extérieur d'une boîte d'une montre-bracelet 10 pourvue d'un dispositif d'affichage de l'heure comprenant notamment un cadran 12, une aiguille des heures 14 et une aiguille des minutes 16, ces aiguilles étant fixées à des arbres respectifs coaxiaux 18, 20 entraînés par un mouvement d'horlogerie (non représenté). Les arbres coaxiaux 18, 20 permettent de faire tourner les aiguilles 14, 16 autour d'un axe de rotation commun 22. Le cadran 12 est posé sur un support de cadran 24 et ces deux éléments comportent un orifice central 26 qui s'étend autour des arbres 18, 20. Au-dessous du support 24 se trouve une carte à circuits imprimés 28 portant une source lumineuse 30 pour produire un faisceau lumineux dirigé (essentiellement) axialement, c.-à-d. essentiellement parallèle à l'axe de rotation 22. La source lumineuse 30 est formée par une pluralité de diodes électroluminescentes (LED) qui sont réparties autour des arbres 18, 20 et montées sur la carte à circuits imprimés 28. Les diodes sont de préférence réparties uniformément autour de l'axe, p. ex. trois diodes séparées de 120° les unes des autres. Alternativement ou additionnellement, la source lumineuse pourrait comporter soit des diodes électroluminescentes organiques (OLED), soit des sources laser miniatures par exemple du type diode laser à cavité verticale émettant par la surface (dénommée en anglais vertical-cavity surface-emitting laser VCSEL). Dans d'autres modes de réalisation, il est possible d'utiliser des sources lumineuses de forme allongée ou même annulaire, pour assurer une meilleure uniformité de l'intensité lumineuse autour de l'axe 22. Les diodes peuvent être allumées toutes en même temps ou non selon les effets esthétiques désirés, mises en action au moyen d'un organe manuel tel qu'un bouton-poussoir de la montre et/ou par un détecteur de luminosité. Il peut être par exemple envisagé pour des raisons esthétiques ou ludiques, de n'allumer que certaines diodes, par exemple pour n'illuminer que l'aiguille des minutes, par exemple pour indiquer une autre information que l'heure (quantième ou autre).

La source lumineuse 30 peut être alimentée par les batteries de la montre. Les diodes peuvent émettre une lumière invisible en direct, comme dans l'ultra-violet, afin de limiter l'impact esthétique négatif en cas de fuite autour de l'axe des aiguilles. Les UV sont ensuite reconvertis dans le matériau fluorescent en une lumière visible.

Le mouvement d'horlogerie peut être d'un type quelconque. S'il est électronique, il peut être monté soit sur la face inférieure de la carte à circuits imprimés 28, soit une autre carte située au-dessous.

**Les** aiguilles 14, 16 sont destinées à être illuminées intérieurement par la source lumineuse 30, pour faciliter la lecture de l'heure et en particulier rendre celle-ci possible dans l'obscurité. Selon l'invention, le fait que la surface côté utilisateur soit opaque permet d'avoir une esthétique standard de l'aiguille avec toutes les finitions habituelles et connues. Il n'y a donc pas de contrainte esthétique liée à l'invention et en particulier l'esthétique de jour n'est pas impactée par l'invention.

Avec référence aux Figs. 1-3, l'aiguille des heures 14 et des minutes 16 comportent, chacune, une douille centrale métallique 32, 33 (non représenté sur les Figs. 2, 3) et une pièce 34 ayant plusieurs couches incluant une couche métallique opaque 36, une couche guide de lumière transparente 38 et une couche d'isolation optique 40 entre la couche métallique opaque 36 et la couche guide de lumière transparente 38. La pièce 34 forme un corps allongé 42 et une tête circulaire 44, la tête 44 ayant un trou central 46 dans lequel est arrangée la douille 32, 33. Les douilles 32, 33 peuvent être intégrales à la pièce, ou éventuellement intégrales à la couche métallique opaque 36. La pièce 34 peut être fabriquée par des moyens de fabrication conventionnels (p. ex les couches de la pièce peuvent d'abord être déposées puis étampés ou découpés afin de former l'aiguille). La pièce 34 est fixée sur l'arbre correspondant 18, 20 de la façon habituelle. Le corps 42 de l'aiguille a de préférence une forme triangulaire ou trapézoïdale en plan, mais d'autres formes sont possibles selon les besoins.

Traditionnellement, dans une montre, l'aiguille des heures 14 est montée au-dessous de l'aiguille des minutes 16. Afin de permettre le passage de la lumière provenant de la source de lumineuse 30 vers l'aiguille des minutes 16, la tête circulaire 44 de l'aiguille des heures 14 diffère de celle des minutes 16, entre autre, en ce que la tête circulaire 44 de l'aiguille des heures 14 comprend des trous secondaires 48 arrangés autour du trou central 46. Ceci permet au flux lumineux de traverser l'aiguille des heures 14 au travers des trous secondaires 48 et, ainsi, au moins une partie du flux arrive sur la face inférieure de l'aiguille des minutes 16. Le corps allongé 42 de l'aiguille des minutes 16 est traditionnellement plus long que le corps allongé 42 de l'aiguille des heures 14. Par contre, leurs têtes respectives ont généralement la même taille. La tête 44 de l'aiguille des minutes 16 est recouverte de préférence d'un capot opaque 50. Il est aussi possible d'avoir des têtes de dimensions différentes, permettant une disposition de LEDs (cercles concentriques par exemple) favorisant l'illumination de l'une ou l'autre aiguille sans gêne mécanique.

La face inférieure de la couche guide de lumière transparente 38 comprend un ou plusieurs dépôts de matériau fluorescent 52, en regard avec la source lumineuse 30 via l'orifice central 26 et éventuellement en plus via les trous secondaires 48, de telle façon à établir un contact optique avec la couche guide de lumière transparente 38 (p. ex. le matériau fluorescent 52 peut être formé de pigments fluorescent incorporés dans une colle). Alternativement le matériau fluorescent peut être incorporé dans la couche guide de lumière. En fonctionnement, la source lumineuse 30 illumine le matériau fluorescent 52 avec un flux lumineux 54 ayant une longueur d'onde plus courte que la longueur d'onde qui sera réémise par le matériau fluorescent 52. Le matériau fluorescent 52 absorbe cette lumière incidente et la réémet 56 de façon isotrope, notamment dans la couche guide de lumière transparente 38. La présence de la couche d'isolation optique 40, permet une réflexion totale interne de la lumière fluorescent se propageant dans la couche guide de lumière et ainsi évite une absorption progressive dans la couche métallique. Le Δn entre son l'indice de réfraction et l'indice de réfraction de la couche guide de lumière transparente est compris dans l'intervalle allant de 0,5 à 0,9, préférablement de 0,55 à 0,8, plus préférablement de 0,6 à 0,75, permet d'augmenter la valeur de l'angle critique et donc l'ouverture numérique de la couche guide de lumière afin de maximiser le couplage de la lumière fluorescente. On notera que la présence de la couche d'isolation permet la transmission sans perte dans la couche guide une fois la lumière couplée et que l'indice de la couche d'isolation influence la quantité de lumière couplée. La couche d'isolation optique peut avoir une épaisseur comprise dans l'intervalle allant de 2 µm à 15 µm, préférablement de 3 µm à 12 µm, encore plus préférablement de 5 µm à 10 µm. Une multitude de réflexions totales internes dans la couche guide de lumière transparente 38 s'ensuivent jusqu'à arriver à une extrémité du corps allongé 42 où le flux lumineux est transmis vers l'extérieur.

Une zone de diffusion de lumière 58 (réalisé p. ex. par un dépôt de résine) peut être ajoutée sur la pointe de l'aiguille, s'étendant au-delà (c.-à-d. faisant saillie) de la couche métallique opaque 36 pour faciliter la fuite du flux lumineux et obtenir un motif décoratif sur ladite pointe. La surface de la zone de diffusion de lumière 58 peut être dépolie ou granuleuse. Dans d'autre mode de réalisations, non seulement la pointe de l'aiguille mais aussi les bords du corps allongé 42 (et éventuellement la tête) comprennent une zone de diffusion de la lumière 58.

Il est aussi bien sûr possible de placer les sources de lumière LEDs à un autre emplacement que proche de l'axe de rotation et d'ajouter un coupleur optique permettant d'amener le flux lumineux à l'endroit adéquat pour exciter le matériau fluorescent des aiguilles.

Il est bien évident qu'une aiguille réalisée selon les principes de la présente invention peut aussi être utilisée comme aiguille unique d'un indicateur quelconque, par exemple sur le tableau de bord d'une automobile.

Alors que des modes de réalisation particuliers viennent d'être décrits en détail, l'homme du métier appréciera que diverses modifications et alternatives à ceux-là puissent être développées à la lumière de l'enseignement global apporté par la présente divulgation de l'invention définie par les revendications annexes.

## Revendications

1. Indicateur mobile (16) pour un dispositif d'affichage analogique destiné à se déplacer relativement à un cadran, notamment pour une pièce d'horlogerie, comprenant une pièce à plusieurs couches incluant une couche métallique opaque (36) et une couche guide de lumière transparente (38) et formant un corps et une tête de l'indicateur, ladite tête étant centrée par rapport à un axe de rotation de l'indicateur et agencée pour recevoir un flux lumineux sur sa face inférieure, dans lequel un matériau fluorescent (52) est agencé sur ou dans la couche guide de lumière transparente au niveau de la tête de l'indicateur pour absorber au moins une partie dudit flux lumineux et pour réémettre un second flux lumineux de fluorescence dans la couche guide de lumière transparente, ladite pièce comprenant une face supérieure destinée à être visible par un observateur et une face inférieure destinée à venir en regard du cadran, **caractérisé en ce que** ladite couche métallique opaque est disposée sur la face supérieure de ladite pièce.

2. Indicateur selon la revendication 1, dans lequel la couche guide de lumière transparente produit une réflexion totale interne des rayons lumineux du second flux lumineux sensiblement perpendiculaires audit axe de rotation.

3. Indicateur selon l'une quelconque des revendications 1 à 2, dans lequel la pièce à plusieurs couches comprend une couche d'isolation optique entre la couche métallique opaque et la couche guide de lumière transparente, le Δn entre l'indice de réfraction de la couche d'isolation optique et l'indice de réfraction de la couche guide de lumière transparente étant compris dans l'intervalle allant de 0,5 à 0,9, préférablement de 0,55 à 0,8, plus préférablement de 0,6 à 0,75.

4. Indicateur selon la revendication 3, la couche d'isolation optique ayant une épaisseur comprise dans l'intervalle allant de 2 µm à 15 µm, préférablement de 3 µm à 12 µm, encore plus préférablement de 5 µm à 10 µm.

5. Indicateur selon l'une quelconque des revendications 1 à 4, dans lequel les plusieurs couches de la pièce sont d'abord déposées puis étampées ou découpées afin de former l'indicateur.

6. Indicateur selon l'une quelconque des revendications 1 à 5, dans lequel la pièce est plate, ses faces supérieure et inférieure étant planes.

7. Indicateur selon l'une quelconque des revendications 1 à 6, dans lequel ladite tête comporte un trou central dans lequel est arrangée une douille en matière opaque.

8. Indicateur selon l'une quelconque de revendications 1 à 7, l'indicateur étant une aiguille.

9. Jeu d'indicateurs comprenant, au moins, un premier indicateur et un second indicateur selon l'une quelconque des revendications 7 à 8, le premier indicateur comprenant un ou plusieurs trous secondaires arrangés autour du trou central de la tête, de telle façon à permettre audit flux lumineux de traverser le premier indicateur au travers des trous secondaires pour qu'au moins une partie dudit flux soit absorbé par le matériau fluorescent du second indicateur lorsque le premier indicateur et le second indicateur sont arrangés de telle façon à ce que les axes de rotation du premier indicateur et du second indicateur sont confondus.

10. Dispositif d'affichage pour une pièce d'horlogerie, le dispositif comprenant :
un cadran ;
des indicateurs selon l'une quelconque des revendications 1 à 9, disposés au-dessus du cadran, les têtes respectives des indicateurs étant superposées et fixées à des arbres respectifs pour tourner autour d'un axe de rotation commun ; et
une source stationnaire d'éclairage agencée pour éclairer par-dessous l'ensemble des têtes des indicateurs au moyen d'un flux lumineux sensiblement parallèle à l'axe de rotation commun et ayant une longueur d'onde plus petite que la longueur d'onde réémise par le matériau fluorescent.

11. Dispositif selon la revendication 10, dans lequel la source stationnaire d'éclairage comporte des diodes électroluminescentes et/ou des diodes électroluminescentes organiques et/ou des sources laser miniatures type VCSEL qui sont réparties autour desdits arbres et montées sur un élément à circuits imprimés disposé au-dessous du cadran.

12. Montre comprenant un dispositif d'affichage selon l'une quelconque des revendications 10 à 11, les indicateurs étant des aiguilles.

## Patentansprüche

1. Beweglicher Anzeiger (16) für eine analoge Anzeigevorrichtung, der dazu bestimmt ist, sich in Bezug auf ein Zifferblatt zu bewegen, insbesondere für eine Uhr, umfassend ein mehrschichtiges Bauteil, das eine undurchsichtige Metallschicht (36) und eine transparente Lichtleiterschicht (38) enthält und einen Körper und einen Kopf des Anzeigers bildet, wobei der Kopf im Verhältnis zu einer Drehachse des Anzeigers zentriert und dazu angeordnet ist, einen Lichtstrom auf seiner Unterseite zu empfangen, wobei ein fluoreszierendes Material (52) auf oder in der transparenten Lichtleiterschicht auf Höhe des Kopfes des Anzeigers angeordnet ist, um mindestens einen Teil des Lichtstroms zu absorbieren und einen zweiten Fluoreszenzlichtstrom in der transparenten Lichtleiterschicht neu auszustrahlen, wobei das Bauteil eine Oberseite umfasst, die dazu bestimmt ist, von einem Betrachter gesehen zu werden, und eine Unterseite, die dazu bestimmt ist, dem Zifferblatt gegenüberzuliegen, **dadurch gekennzeichnet, dass** die undurchsichtige Metallschicht sich auf der Oberseite des Bauteils befindet.

2. Anzeiger nach Anspruch 1, wobei die transparente Lichtleiterschicht eine interne Totalreflexion der Lichtstrahlen des zweiten Lichtstroms im Wesentlichen senkrecht zur Drehachse erzeugt.

3. Anzeiger nach einem der Ansprüche 1 bis 2, wobei das mehrschichtige Bauteil eine optische Isolationsschicht zwischen der undurchsichtigen Metallschicht und der transparenten Lichtleiterschicht umfasst, wobei die Δn zwischen dem Brechungsindex der optischen Isolationsschicht und dem Brechungsindex der transparenten Lichtleiterschicht im Bereich von 0,5 bis 0,9, vorzugsweise von 0,55 bis 0,8, besonders bevorzugt von 0,6 bis 0,75 liegt.

4. Anzeiger nach Anspruch 3, wobei die optische Isolationsschicht eine Dicke aufweist, die im Bereich von 2 µm bis 15 µm, vorzugsweise von 3 µm bis 12 µm, besonders bevorzugt von 5 µm bis 10 µm liegt.

5. Anzeiger nach einem der Ansprüche 1 bis 4, wobei die mehreren Schichten des Bauteils zunächst aufgebracht und dann gestanzt oder geschnitten werden, um den Anzeiger zu bilden.

6. Anzeiger nach einem der Ansprüche 1 bis 5, wobei das Bauteil flach ist und dessen Ober- und Unterseite eben sind.

7. Anzeiger nach einem der Ansprüche 1 bis 6, wobei der Kopf ein zentrales Loch aufweist, in dem eine Fassung aus einem undurchsichtigen Material angeordnet ist.

8. Anzeiger nach einem der Ansprüche 1 bis 7, wobei der Anzeiger ein Uhrzeiger ist.

9. Satz von Anzeigern, der mindestens einen ersten Anzeiger und einen zweiten Anzeiger umfasst, nach einem der Ansprüche 7 bis 8, wobei der erste Anzeiger ein oder mehrere sekundäre Löcher umfasst, die um das zentrale Loch des Kopfes herum angeordnet sind, um zu ermöglichen, dass der Lichtstrom durch die sekundären Löcher durch den ersten Anzeiger hindurchtritt, so dass mindestens ein Teil des Flusses vom fluoreszierenden Material des zweiten Anzeigers absorbiert wird, wenn der erste Anzeiger und der zweite Anzeiger so angeordnet sind, dass die Drehachsen des ersten Anzeigers und des zweiten Anzeigers zusammenfallen.

10. Anzeigevorrichtung für eine Uhr, wobei die Vorrichtung Folgendes umfasst:
ein Zifferblatt;
Anzeiger nach einem der Ansprüche 1 bis 9, die über dem Zifferblatt angeordnet sind, wobei die jeweiligen Köpfe der Anzeiger übereinander angeordnet und an jeweiligen Wellen befestigt sind, um sich um eine gemeinsame Drehachse zu drehen; und
eine stationäre Beleuchtungsquelle, die dazu angeordnet ist, unterhalb aller Köpfe der Anzeiger mit einem Lichtstrom zu leuchten, der im Wesentlichen parallel zur gemeinsamen Drehachse verläuft und eine kürzere Wellenlänge als die vom fluoreszierenden Material neu ausgestrahlte Wellenlänge aufweist.

11. Vorrichtung nach Anspruch 10, wobei die stationäre Beleuchtungsquelle Elektrolumineszenzdioden und/oder organische Elektrolumineszenzdioden und/oder Miniaturlaserquellen vom VCSEL-Typ umfasst, die um die Wellen herum verteilt und auf einem unter dem Zifferblatt angeordneten gedruckten Schaltungselement montiert sind.

12. Kleinuhr, umfassend eine Anzeigevorrichtung nach einem der Ansprüche 10 bis 11, wobei die Anzeiger Uhrzeiger sind.

## Claims

1. Moving indicator (16) for an analogue display device designed to move relative to a dial, in particular for a timepiece, comprising a multi-layer part including an opaque metal layer (36) and a transparent light guide layer (38) and forming a body and a head of the indicator, said head being centred relative to a rotational axis of the indicator and arranged to receive a luminous flux on the bottom face thereof, wherein a fluorescent material (52) is arranged on or in the transparent light guide layer at the head of the indicator to absorb at least part of said luminous flux and to re-emit a second luminous fluorescence flux in the transparent light guide layer, said part comprising a top face designed to be visible by an observer and a bottom face designed to face the dial, **characterized in that** said opaque metal layer is disposed on the top face on said part.

2. Indicator according to claim 1, wherein the transparent light guide layer produces a total internal reflection of the luminous rays of the second luminous flux substantially perpendicular to said rotational axis.

3. Indicator according to any one of claims 1 to 2, wherein the multi-layer part comprises an optical isolation layer between the opaque metal layer and the transparent light guide layer, the Δn between the refractive index of the optical isolation layer and the refractive index of the transparent light guide layer lying in the interval 0.5 to 0.9, preferably in the interval 0.55 to 0.8, more preferably in the interval 0.6 to 0.75.

4. Indicator according to claim 3, the optical isolation layer having a thickness that lies in the interval 2 µm to 15 µm, preferably in the interval 3 µm to 12 µm, more preferably in the interval 5 µm to 10 µm.

5. Indicator according to any one of claims 1 to 4, wherein the plurality of layers of the part are firstly deposited then stamped or cut to form the indicator.

6. Indicator according to any one of claims 1 to 5, wherein the part is flat, the top and bottom faces thereof being planar.

7. Indicator according to any one of claims 1 to 6, wherein said head includes a central hole wherein a sleeve made of an opaque material is arranged.

8. Indicator according to any one of claims 1 to 7, the indicator being a hand.

9. Set of indicators comprising at least a first indicator and a second indicator according to any one of claims 7 to 8, the first indicator comprising one or more secondary holes arranged about the central hole of the head so as to allow said luminous flux to pass through the first indicator through the secondary holes so that at least part of said flux is absorbed by the fluorescent material of the second indicator when the first indicator and the second indicator are arranged such that the rotational axes of the first indicator and of the second indicator are aligned.

10. Display device for a timepiece, the device comprising:
a dial;
indicators according to any one of claims 1 to 9, disposed above the dial, the respective heads of the indicators being superimposed and fastened to respective arbors in order to rotate about a shared rotational axis; and
a stationary lighting source arranged to illuminate beneath all of the heads of the indicators by means of a luminous flux substantially parallel to the shared rotational axis and having a shorter wavelength than the wavelength re-emitted by the fluorescent material.

11. Device according to claim 10, wherein the stationary lighting source includes electroluminescent diodes and/or organic electroluminescent diodes and/or miniature laser sources of the VCSEL type which are distributed about said arbors and mounted on a printed circuit component disposed beneath the dial.

12. Watch comprising a display device according to any one of claims 10 to 11, the indicators being hands.
